# EUROPEAN PATENT APPLICATION

(11) **EP 4 459 754 A1**
(43) Date of publication of application: **06.11.2024**
(21) Application number: 22915565.0
(22) Date of filing: 16.11.2022
(51) Int. Cl.: H01M 50/107, H01M 4/133, H01M 4/38, H01M 4/587, H01M 10/052, H01M 10/0587, H01M 50/119, H01M 50/133

(54) **CYLINDRICAL SECONDARY BATTERY**

(30) Priority: 27.12.2021 JP 2021212348
(71) Applicant: Panasonic Intellectual Property Management Co., Ltd., Osaka-shi, Osaka 540-6207 (JP)
(72) Inventor: INOUE, Kaoru, Kadoma-shi, Osaka 571-0057 (JP); SUZUKI, Hirotetsu, Kadoma-shi, Osaka 571-0057 (JP); SHIRANE, Takayuki, Kadoma-shi, Osaka 571-0057 (JP); NAKAYAMA, Takahito, Kadoma-shi, Osaka 571-0057 (JP)
(74) Representative: Novagraaf International SA
(86) International application number: PCT/JP2022/042553
(87) International publication number: WO 2023/127334

(57) **Abstract**

A cylindrical secondary battery (10) comprises an outer package can (15) which has a cylindrical cylinder part (15a) and an electrode body (14) which is arranged within the cylinder part. The electrode body (14) is obtained by winding a positive electrode plate and a negative electrode plate, with a separator being interposed therebetween. With respect to the outer package can (15), the ratio of the minimum value of the outer diameters in the cylinder central part of the outer package can (15), the cylinder central part being positioned in the center in the axial direction, to the average value of the outer diameters in the cylinder bottom end part is 99.89% or more; and the ratio of the maximum value of the outer diameters in the cylinder central part to the average value of the outer diameters in the cylinder bottom end part is 100.80% or less. The outer diameters in the cylinder central part periodically change with respect to the angle of circumference; and the period in which the outer diameters in the cylinder central part change with respect to the angle of circumference is 0.4π to 1.0π.

## Description

### TECHNICAL FIELD

The present disclosure relates to a cylindrical secondary battery.

### BACKGROUND ART

A cylindrical secondary battery such as a lithium-ion secondary battery comprising: an electrode assembly (wound product) in which a positive electrode plate and a negative electrode plate are wound via a separator; and a cylindrical exterior housing can housing the electrode assembly and an electrolyte liquid has been conventionally known. In this secondary battery, each of the positive electrode plate and the negative electrode plate includes a core being a metal foil and a mixture layer formed on both surfaces of the core (see Patent Literature 1).

In addition, Patent Literature 2 describes that, for example, electrochemical insertion of lithium ions in a negative electrode mixture layer including a silicon-based material may expand its volume to approximately greater than or equal to three times and less than or equal to four times and contract during discharge, resulting in increase in change in expansion and contraction of an electrode assembly.

### CITATION LIST

### PATENT LITERATURE

PATENT LITERATURE 1: International Application Publication No. 2019/193870
PATENT LITERATURE 2: Japanese Unexamined Patent Application Publication No. 2013-239378

### SUMMARY

### TECHNICAL PROBLEM

In the cylindrical secondary battery described in Patent Literature 1, when the change in expansion and contraction of the electrode assembly is increased by using the silicon-based material as the negative electrode active material for forming the negative electrode plate, and the like, it is considered to increase in advance a difference between an outer diameter of the electrode assembly and an inner diameter of the exterior housing can before beginning of charge and discharge, considering the expansion of the negative electrode plate in advance. However, this case may decrease a battery capacity or may deteriorate cycle characteristics, which are a capacity retention ratio in repeating charge-discharge cycles. Meanwhile, it is considered that the expansion of the electrode assembly is suppressed by a binding pressure of the exterior housing can to prevent the deterioration of the cycle characteristics, but an excessively high binding pressure has a problem of increase in change in an outer circumferential shape of the exterior housing can against a cylindrical surface thereof.

It is an advantage of the present disclosure to improve the cycle characteristics and the battery capacity while inhibiting the change in the outer circumferential shape of the exterior housing can against the cylindrical surface in the cylindrical secondary battery.

### SOLUTION TO PROBLEM

A cylindrical secondary battery according to the present disclosure is a cylindrical secondary battery comprising: an exterior housing can having a cylindrical barrel part and one end sealed with a bottom plate; and an electrode assembly disposed inside the barrel part, wherein a positive electrode plate and a negative electrode plate are wound via a separator in the electrode assembly, a proportion of a minimum value of outer diameters at a center of the barrel part being a center in an axial direction of the exterior housing can relative to an average value of outer diameters on a bottom end of the barrel part is greater than or equal to 99.89%, and a proportion of a maximum value of the outer diameters at the center of the barrel part relative to an average value of the outer diameters on the bottom end of the barrel part is less than or equal to 100.80% in the exterior housing can, and the outer diameter at the center of the barrel part periodically changes relative to a circumferential angle, and a period of change in the outer diameter at the center of the barrel part relative to the circumferential angle is greater than or equal to 0.4π and less than or equal to 1.0π.

### ADVANTAGEOUS EFFECT OF INVENTION

According to the cylindrical secondary battery according to the present disclosure, the outer diameter of the electrode assembly before the beginning of charge and discharge may be increased in advance even with the large change in expansion and contraction of the electrode assembly due to charge and discharge, and thereby the battery capacity may be increased. In addition, the expansion of the electrode assembly may be suppressed by the binding pressure of the exterior housing can, and thereby the cycle characteristics may be improved. Further, excessive increase in the binding pressure of the exterior housing can relative to the electrode assembly may be prevented, and thereby the change in the outer circumferential shape of the exterior housing can against the cylindrical surface may be inhibited.

### BRIEF DESCRIPTION OF DRAWING

FIG. 1 is a sectional view of a cylindrical secondary battery of an example of an embodiment.
FIG. 2 is a schematic view illustrating sectional shapes before charge (a) and after charge (b) in a cylindrical secondary battery of an embodiment.
FIG. 3 is a schematic view illustrating sectional shapes before charge (a) and after charge (b) in a cylindrical secondary battery of Comparative Example when an outer diameter of an electrode assembly is set to be significantly smaller than an inner diameter of the exterior housing can with considering an extent of expansion due to charge.
FIG. 4 is a view showing measurement results of an outer diameter of a barrel part and test results of a capacity retention ratio in Comparative Example 1 and Examples 1 and 2.
FIG. 5 is a view showing measurement results of an outer diameter of a barrel part and test results of a capacity retention ratio in Examples 3 to 5.
FIG. 6 is a view showing measurement results of an outer diameter of a barrel part and test results of a capacity retention ratio in Comparative Example 2.
FIG. 7 is a view indicating a relationship between an outer diameter on a bottom end of a barrel part and a circumferential angle of an outer diameter at a center of the barrel part in a cylindrical secondary battery of Comparative Example 1.
FIG. 8 is a view corresponding to FIG. 7 in a cylindrical secondary battery of Example 2.

### DESCRIPTION OF EMBODIMENTS

Hereinafter, embodiments according to the present invention will be described in detail with reference to the attached drawings. In the following description, specific shapes, materials, values, directions, and the like, which are examples for facilitating understanding of the present invention, may be appropriately modified with specifications of cylindrical secondary batteries. The term "substantially" hereinafter is used to mean, for example, including a case regarded as substantially same in addition to a case of completely same. Further, when a plurality of embodiments and modified examples are included in the following description, use in appropriate combination of characteristic portions thereof are anticipated in advance.

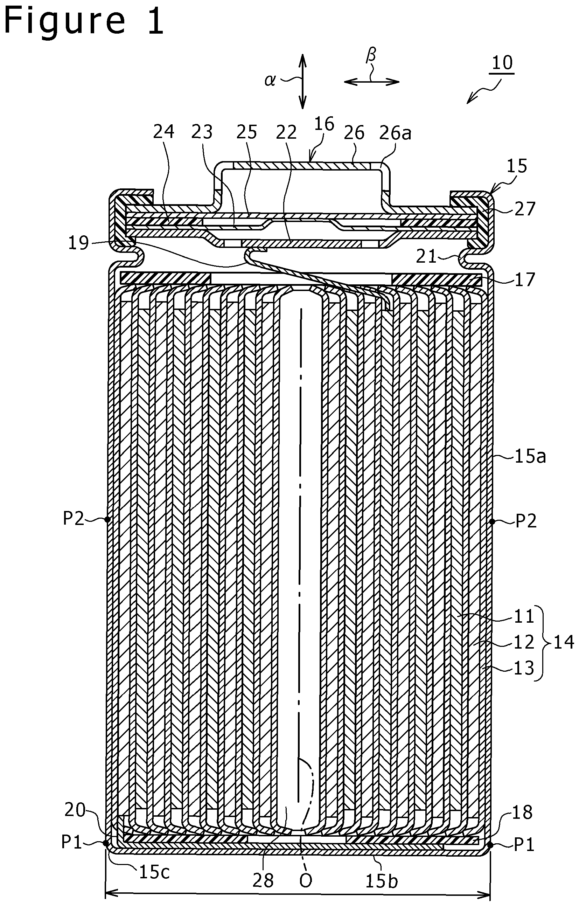

FIG. 1 is a sectional view of a cylindrical secondary battery 10 of an embodiment. As exemplified in FIG. 1, the cylindrical secondary battery 10 comprises a wound electrode assembly 14, a non-aqueous electrolyte (not illustrated), an exterior housing can 15, and a sealing assembly 16. Hereinafter, "cylindrical secondary battery" will be described as "secondary battery". The wound electrode assembly 14 has a positive electrode plate 11, a negative electrode plate 12, and a separator 13, and the positive electrode plate 11 and the negative electrode plate 12 are spirally wound via the separator 13. Hereinafter, one side in an axial direction of the electrode assembly 14 may be referred to as "upper side", and the other side in the axial direction may be referred to as "lower side". The non-aqueous electrolyte includes a non-aqueous solvent and an electrolyte salt dissolved in the non-aqueous solvent. The non-aqueous electrolyte is not limited to a liquid electrolyte, and may be a solid electrolyte using a gel polymer or the like.

The positive electrode plate 11 has a band-shaped positive electrode core and a positive electrode tab 19 bonded to the positive electrode core. The positive electrode tab 19 corresponds to a metal tab for collecting current. The positive electrode tab 19 is a conductive member for electrically connecting the positive electrode core and a positive electrode terminal, and extends from an upper end of the positive electrode core toward one side (upper side) in the axial direction α in the electrode assembly 14.

The positive electrode tab 19 is a band-shaped conductive member. A constituting material of the positive electrode tab is not particularly limited. The positive electrode tab 19 is preferably constituted with a metal containing aluminum as a main component. Further, on the positive electrode plate 11, a positive electrode mixture layer is formed on each of an inner winding side (inner side in a radial direction β) and an outer winding side (outer side in the radial direction β) of the positive electrode core.

The negative electrode plate 12 has a band-shaped negative electrode core and a negative electrode tab 20 bonded to the negative electrode core. The negative electrode tab 20 is a conductive member for electrically connecting the negative electrode core and an exterior housing can 15, described later, and extends from a lower end of the negative electrode core toward the other side (lower side) in the axial direction α in the electrode assembly 14. The exterior housing can 15 becomes a negative electrode terminal. The negative electrode tab 20 is provided on, for example, an outer winding part (outer circumferential surface side part) of the electrode assembly 14. The negative electrode tab 20 is a band-shaped conductive member. A constituting material of the negative electrode tab is not particularly limited. The negative electrode tab is preferably constituted with a metal containing nickel or copper as a main component, or constituted with a metal including both nickel and copper. The negative electrode tab may be provided at a plurality of positions of the negative electrode core. Further, in the negative electrode plate 12, the negative electrode active material layer (not illustrated) is formed on each of the inner winding side (inner side in the radial direction) and the outer winding side (outer side in the radial direction) of the negative electrode core in the negative electrode plate 12.

The negative electrode core may be exposed to the outermost circumferential surface of the electrode assembly 14 to form an exposed portion, and this exposed portion may be contacted with the inner surface of the barrel part of the exterior housing can 15 to be electrically connected to the exterior housing can 15. In this time, the electric connection between the negative electrode plate 12 and the barrel part of the exterior housing can 15 may achieve further better current collectability.

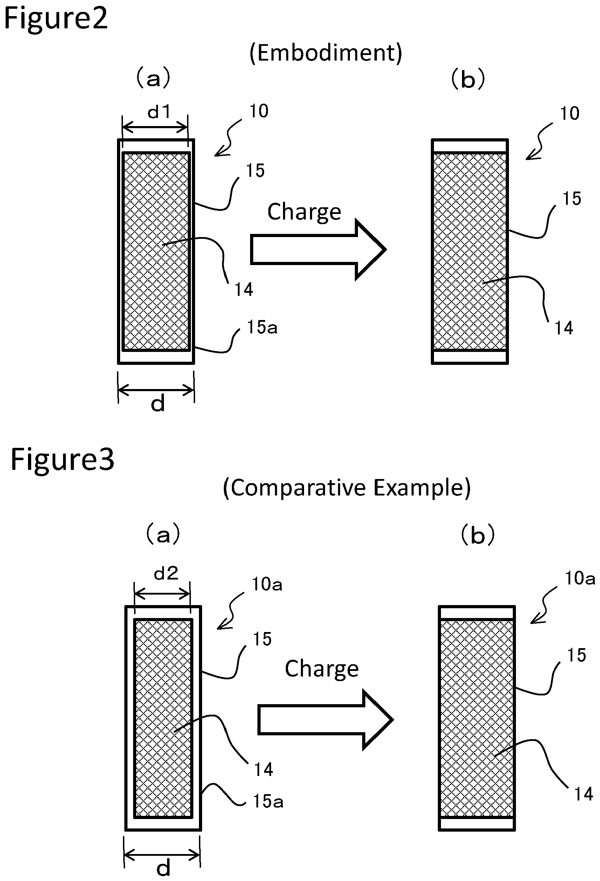

As noted above, the electrode assembly 14 has the wound structure in which the positive electrode plate 11 and the negative electrode plate 12 are spirally wound via the separator 13. The positive electrode plate 11, the negative electrode plate 12, and the separator 13 are all formed in a band shape, and spirally wound to form a state of being alternately stacked in the radial direction β of the electrode assembly 14. In the electrode assembly 14, a longitudinal direction of the electrode plates 11 and 12 is a winding direction γ (FIG. 2), and a width direction of the electrode plates 11 and 12 is the axial direction α (FIG. 1).

Adheres on the outermost circumferential surface of the electrode assembly 14 is a winding-stop tape (not illustrated) which strides a winding-stop end of the electrode assembly 14 across the winding direction so as to fix the winding-stop end. At a center of the electrode assembly 14, a space 28 extending along a center axis O is formed.

Further, the exterior housing can 15 and the sealing assembly 16 constitute a metallic battery case to house the electrode assembly 14 and the non-aqueous electrolyte. Insulating plates 17 and 18 are provided on the upper and lower sides of the electrode assembly 14, respectively. The positive electrode tab 19 extends through a through hole of the insulating plate 17 on the upper side toward the sealing assembly 16 side, and welded with a lower surface of a filter 22, which is a bottom plate of the sealing assembly 16. In the cylindrical secondary battery 10, a cap 26, which is a top plate of the sealing assembly 16 electrically connected to the filter 22, becomes a positive electrode terminal.

The exterior housing can 15 is a bottomed cylindrical metallic container having a cylindrical barrel part 15a, a bottom plate 15b to seal one end of the barrel part 15a, and an opening on the other end. A material of the exterior housing can is, for example, Fe. The electrode assembly 14 is disposed inside the barrel part 15a. A gasket 27 is provided between the exterior housing can 15 and the sealing assembly 16 to achieve sealability in the battery case. The exterior housing can 15 has a protruded part 21 formed by, for example, pressing a side wall thereof from an outside to support the sealing assembly 16. The protruded part 21 is preferably formed circularly along the circumferential direction of the exterior housing can 15, and supports the sealing assembly 16 with the upper surface thereof. The sealing assembly 16 seals the opening of the exterior housing can 15.

The sealing assembly 16 has the filter 22, a lower valve member 23, an insulating member 24, an upper valve member 25, and the cap 26, which are stacked in this order from the electrode assembly 14 side. Each member constituting the sealing assembly 16 has, for example, a disk shape or a ring shape, and each member except for the insulating member 24 is electrically connected to each other. The lower valve member 23 and the upper valve member 25 are connected to each other at each of centers thereof, and the insulating member 24 is interposed between each of the circumferences thereof. If the internal pressure of the battery increases due to abnormal heat generation, for example, the lower valve member 23 breaks and thus the upper valve member 25 expands toward the cap 26 side to be separated from the lower valve member 23, resulting in cutting off of an electrical connection between both the members. If the internal pressure further increases, the upper valve member 25 breaks, and gas is discharged through an opening 26a of the cap 26.

Hereinafter, constituents of the electrode assembly 14 will be described in detail. For the positive electrode core of the positive electrode plate 11, a foil of metal such as aluminum, a film in which such a metal is disposed on a surface layer, and the like are used, for example. A preferable positive electrode core is a foil of metal containing aluminum or an aluminum alloy as a main component. A thickness of the positive electrode core is, for example, greater than or equal to 10 µm and less than or equal to 30 µm.

The positive electrode mixture layer preferably includes a positive electrode active material, a conductive agent, and a binder. The positive electrode plate 11 is produced by applying a positive electrode mixture slurry including the positive electrode active material, the conductive agent, the binder, and a solvent such as N-methyl-2-pyrrolidone (NMP) on both the surfaces of the positive electrode core, and then drying and rolling the applied film.

Examples of the positive electrode active material include a lithium-containing transition metal oxide containing a transition metal element such as Co, Mn, and Ni. The lithium-containing transition metal oxide is not particularly limited, and preferably a composite oxide represented by the general formula Li₁₊ₓMO₂, wherein -0.2<x≤0.2, and M represents at least one selected from Ni, Co, Mn, and Al.

Examples of the conductive agent include carbon materials such as carbon black (CB), acetylene black (AB), Ketjenblack, and graphite. Examples of the binder include fluororesins such as polytetrafluoroethylene (PTFE) and polyvinylidene fluoride (PVdF), polyacrylonitrile (PAN), a polyimide (PI), an acrylic resin, and a polyolefin resin. With these resins, carboxymethylcellulose (CMC) or a salt thereof, polyethylene oxide (PEO), and the like may be used in combination. These materials may be used singly, or greater than or equal to two of them may be used in combination.

The positive electrode tab 19 is disposed on a core exposed portion on the inner winding side of the positive electrode core, and bonded to the positive electrode core by welding such as ultrasonic welding to be electrically connected.

The negative electrode plate 12 has a band-shaped negative electrode core and a negative electrode mixture layer (not illustrated) formed on the negative electrode core. For the negative electrode core, a foil of metal such as copper, a film in which such a metal is disposed on a surface layer, and the like are used, for example. A thickness of the negative electrode core is, for example, greater than or equal to 5 µm and less than or equal to 30 µm.

The negative electrode mixture layer preferably includes the negative electrode active material and a binder. The negative electrode plate 12 is produced by, for example, applying a negative electrode mixture slurry including the negative electrode active material, the binder, water, and the like on both the surfaces of the negative electrode core, and then drying and rolling the applied film.

The negative electrode active material is not particularly limited as long as it may reversibly occlude and release lithium ions, and graphite such as natural graphite and artificial graphite, metals that forms an alloy with lithium, such as Si and Sn, or an alloy and composite oxide including these materials may be used, for example. For the binder included in the negative electrode active material layer, a resin similar to the case of the positive electrode plate 11 is used, for example. When the negative electrode mixture slurry is prepared with an aqueous solvent, styrene-butadiene rubber (SBR), CMC or a salt thereof, polyacrylic acid or a salt thereof, polyvinyl alcohol, and the like may be used. These materials may be used singly, or greater than or equal to two of them may be used in combination.

For example, the negative electrode mixture layer may include a Si material and graphite. A density of the mixture layer is preferably greater than or equal to 1.3 g/cc and less than or equal to 1.75 g/cc. As the Si material, a first Si material (hereinafter, referred to as "LSX") containing a lithium silicate phase and silicon dispersed in the lithium silicate phase is included, for example. As the Si material, a second silicon material (hereinafter, referred to as "SiO") containing a silicon oxide phase and silicon dispersed in the silicon oxide phase may be included, for example.

When the Si material is included as the negative electrode active material, a content of the Si material is preferably greater than or equal to 6 mass% and less than or equal to 50 mass% relative to a total mass of the negative electrode active material. When the Si material and graphite are included as the negative electrode active material, a blending ratio between the Si material and the graphite in the negative electrode mixture layer is preferably greater than or equal to 6:94 and less than or equal to 50:50 at a mass ratio. That is, in the negative electrode mixture layer, a proportion of the graphite in the negative electrode active material is greater than or equal to 50 mass% and less than or equal to 94 mass%, and a proportion of the Si material in the negative electrode active material is greater than or equal to 6% and less than or equal to 50%. The blending ratio within the above range may easily attempt to increase the capacity while keeping the good cycle characteristics.

The SiO is of, for example, particles in which fine Si particles are dispersed in the silicon oxide phase. A preferable SiO has a sea-island structure in which fine Si particles are substantially uniformly dispersed in a matrix of amorphous silicon oxide, and represented by the general formula SiOₓ (0.5≤x≤1.6).

The LSX is of, for example, particles in which fine Si particles are dispersed in the lithium silicate phase. A preferable LSX has a sea-island structure in which fine Si particles are substantially uniformly dispersed in a matrix of lithium silicate represented by the general formula Li_{2z}SiO_{(2+z)} (0<z<2).

For the binder included in the negative electrode mixture layer, a fluorine-containing resin such as PTFE and PVdF, PAN, a polyimide, an acrylic resin, a polyolefin, and the like may be used similarly to the case of the positive electrode plate 11, but a rubber binder such as styrene-butadiene rubber (SBR) is preferably used. The negative electrode mixture layer 31 may include CMC or a salt thereof, polyacrylic acid (PAA) or a salt thereof, PVA, or the like. CMC or a salt thereof functions as a thickener to regulate the negative electrode mixture slurry to have a viscosity within an appropriate range, and also functions as the binder similarly to SBR.

For the negative electrode mixture layer, a conductive agent such as carbon nanotube (CNT), which is carbon fiber, may be used for example.

For the separator 13, a porous sheet having an ion permeation property and an insulation property is used. Specific examples of the porous sheet include a fine porous thin film, a woven fabric, and a nonwoven fabric. As a material for the separator 13, an olefin resin such as polyethylene and polypropylene, cellulose, and the like are preferable. The separator 13 may have any of a single layer structure and a stacked structure. On a surface of the separator 13, a heat-resistant layer and the like may be formed.

Further, in the exterior housing can 15, a proportion (Dimin×100/D1a) of a minimum value Dimin of outer diameters at a center of the barrel part (P2 position in the axial direction in FIG. 1) being a center in the axial direction of the exterior housing can 15 relative to an average value D1a of outer diameters on a bottom end of the cylindrical barrel part 15a (bottom end of the barrel part) (P1 position in the axial direction in FIG. 1) is greater than or equal to 99.89%. The term "center of the barrel part" refers to a central position in the axial direction between the lower end and the upper end of the exterior housing can 15. In FIG. 1, the outer circumferential surface of the barrel part 15a and the lower surface of the bottom plate 15b of the exterior housing can 15 are connected with an R part 15c having an arc-shaped cross section. The term "bottom end of the barrel part" refers to a connection position between the outer circumferential surface of the barrel part 15a and another surface of the R part 15c. Note that the term "average value of outer diameters of the barrel part 15a" means an average value about the positions of the barrel part 15a in the axial direction, for example the position in the circumferential direction of the outer diameter on the bottom end of the barrel part or at the center of the barrel part.

In the exterior housing can 15, a proportion (Dimax×100/D1a) of a maximum value Dimax of outer diameters at the center of the barrel part relative to the average value D1a of the outer diameters on the bottom end of the barrel part is less than or equal to 100.80%. Further, the outer diameter Di at the center of the barrel part periodically changes relative to a circumferential angle, and the period of change in the outer diameter Di at the center of the barrel part relative to the circumferential angle is greater than or equal to 0.4π and less than or equal to 1.0π, and preferably greater than or equal to 0.4π and less than or equal to 0.6π. A thickness of the exterior housing can 15 is preferably greater than or equal to 0.18 mm and less than or equal to 0.33 mm.

Further, in the exterior housing can 15 in the embodiment, a proportion (Diav×100/D1a) of the average value Diav of the outer diameters at the center of the barrel part relative to the average value D1a of the outer diameters on the bottom end of the barrel part is greater than or equal to 100.10% and less than or equal to 100.50%, and preferably greater than or equal to 100.20% and less than or equal to 100.50%. A standard deviation σi of the outer diameters at the center of the barrel part is greater than or equal to 0.020 mm and less than or equal to 0.050 mm. The above (Dimin×100/D1a), (Dimax×100/D1a), the period of change in the outer diameter Di relative to the circumferential angle, (Diav×100/D1a), and the standard deviation σi are preferably regulated in a fully charged state of the secondary battery 10. The fully charged state refers to a state where the secondary battery 10 is charged up to the upper limit of the nominal capacity.

According to the secondary battery 10, the electrode plates 11 and 12 repeatedly expand and contract due to repeated charge and discharge of the secondary battery 10, and the electrode assembly 14 expands due to the charge to increase the outer diameter. In this time, the proportion (Dimin×100/D1a) of the minimum value Dimin of the outer diameters at the center of the barrel part relative to the average value D1a of the outer diameters on the bottom end of the barrel part is greater than or equal to 99.89%. The proportion (Dimax×100/D1a) of the maximum value Dimax of the outer diameters at the center of the barrel part relative to the average value D1a of the outer diameters on the bottom end of the barrel part is less than or equal to 100.80%. This may absorb enlargement of the outer diameter of the electrode assembly 14 due to expansion near the center of the barrel part of the exterior housing can 15 to a certain extent even when the center in the axial direction of the outer circumferential surface of the electrode assembly 14 expands relative to the outer diameter of the electrode assembly 14 and to the bottom end of the barrel part substantially same as the inner diameter before charge and discharge. Therefore, excessive increase in the binding pressure of the exterior housing can 15 during charge relative to the electrode assembly 14 may be prevented without significantly reducing in advance the outer diameter of the electrode assembly 14 relative to the inner diameter of the barrel part 15a even particularly when the electrode assembly 14 expands so that the outer diameter increases near the center in the axial direction of the electrode assembly 14. This may inhibit change of the outer circumferential shape of the barrel part 15a relative to the cylindrical surface in the exterior housing can 15.

Therefore, the battery capacity may be increased, and the cycle characteristics, namely the capacity retention ratio, of the secondary battery 10 may be improved. The reason is presumed that approaching uniformity of the current collectability of the electrode plates improves conductivity and reduces distribution unevenness of the electrolyte liquid between the electrode plates. Further, since the proportion of the maximum value Dimax of the outer diameters at the center of the barrel part relative to the average value D1a of the outer diameters on the bottom end of the barrel part is less than or equal to 100.80%, the change in the outer circumferential shape of the exterior housing can 15 relative to the cylindrical surface may be inhibited.

Further, in the exterior housing can 15, the proportion of the average value Diav of the outer diameters at the center of the barrel part relative to the average value D1a of the outer diameters on the bottom end of the barrel part is greater than or equal to 100.10% and less than or equal to 100.50%, and preferably greater than or equal to 100.20% and less than or equal to 100.50%. This may also absorb enlargement of the outer diameter of the electrode assembly 14 due to expansion near the center of the barrel part of the exterior housing can 15 to a certain extent even when the center in the axial direction of the outer circumferential surface of the electrode assembly 14 expands relative to the outer diameter of the electrode assembly 14 and to the bottom end of the barrel part substantially same as the inner diameter before charge and discharge. Therefore, excessive increase in the binding pressure of the exterior housing can 15 during charge relative to the electrode assembly 14 may be prevented without significantly reducing in advance the outer diameter of the electrode assembly 14 relative to the inner diameter of the barrel part 15a even particularly when the electrode assembly 14 expands so that the outer diameter increases near the center in the axial direction of the electrode assembly 14. This may inhibit change of the outer circumferential shape of the barrel part 15a relative to the cylindrical surface.

Also, according to this, the battery capacity may be increased, and the cycle characteristics of the secondary battery 10 may be improved. Further, since the standard deviation σi of the outer diameters at the center of the barrel part is greater than or equal to 0.020 mm and less than or equal to 0.050 mm, change of the outer circumferential shape of the barrel part 15a relative to the cylindrical surface may be inhibited.

Note that the configuration in which the proportion (Dimin×100/D1a) of a minimum value Dimin of the outer diameters at the center of the barrel part relative to an average value D1a of the outer diameters on the bottom end of the barrel part is greater than or equal to 99.89%, the proportion of the maximum value Dimax (Dimax×100/D1a) of the outer diameters at the center of the barrel part relative to the average value D1a of the outer diameters on the bottom end of the barrel part is less than or equal to 100.80%, and the outer diameter Di at the center of the barrel part periodically changes relative to the circumferential angle and the period of change in the outer diameter Di at the center of the barrel part relative to the circumferential angle is greater than or equal to 0.4π and less than or equal to 1.0π is specified as a first configuration. In addition, the configuration in which the proportions of an average value Diav of the outer diameters at the center of the barrel part relative to the average value D1a of the outer diameters on the bottom end of the barrel part is greater than or equal to 100.10% and less than or equal to 100.50%, and the standard deviation σi of the outer diameters at the center of the barrel part is greater than or equal to 0.020 mm and less than or equal to 0.050 mm is specified as a second configuration. In this case, only one of the first configuration and the second configuration may also be comprised.

In the embodiment, the effect in a case where the binding pressure of the exterior housing can 15 relative to the electrode assembly 14 increases will be described by using a schematic view. FIG. 2 is a schematic view illustrating sectional shapes before charge (a) and after charge (b) in the secondary battery 10 of the embodiment. In FIG. 2, an entirety of the exterior housing can 15 is regarded as the barrel part 15a in order to facilitate understanding of the effect of the embodiment. As illustrated in FIG. 2(a), the inner diameter on the bottom end of the barrel part 15a is "d". Inside the barrel part 15a, the electrode assembly 14 having the outer diameter of "d1" is housed. In the embodiment, a difference between the inner diameter "d" of the barrel part 15a and the outer diameter "d1" of the electrode assembly 14 is reduced. As illustrated in FIG. 2(b), when the secondary battery 10 is charged, the electrode assembly 14 expands and the binding pressure of the exterior housing can 15 relative to the electrode assembly 14 may be increased to a certain extent. This may increase the battery capacity while preventing considerable deformation of the outer circumferential surface of the electrode assembly 14 due to the binding pressure of the exterior housing can 15 during the expansion. In addition, the expansion of the electrode assembly 14 may be suppressed by the binding pressure of the exterior housing can 15, and thereby the cycle characteristics may be improved.

FIG. 3 is a schematic view illustrating sectional shapes before charge (a) and after charge (b) in a secondary battery 10a of Comparative Example when the outer diameter of the electrode assembly 14 is set to be significantly smaller than an inner diameter "d2" of the exterior housing can 15 with considering an extent of expansion due to charge. In the secondary battery 10a of Comparative Example, as illustrated in FIG. 3(a), before beginning of charge, the inner diameter "d2" of the electrode assembly 14 is significantly small compared with the outer diameter "d" on the bottom end of the barrel part 15a and the outer diameter "d1" of the electrode assembly 14 of the embodiment. When the electrode assembly 14 expands due to charge, the electrode assembly 14 is set to be suppressed by a small binding pressure from the barrel part 15a. In such Comparative Example, the battery capacity is low. In addition, the binding pressure is small, and thereby the cycle characteristics tend to be deteriorated.

Next, total seven types of the secondary batteries of Comparative Examples 1 to 2 and Examples 1 to 5, which were used for experiments for confirming the effect of the embodiment by the inventors of the present disclosure will be described.

### EXAMPLES

### [Example 1]

### [Production of Positive Electrode Plate]

A predetermined known paste positive electrode mixture slurry was applied on both surfaces of a long positive electrode core composed of aluminum foil, dried with a drying apparatus, then cut to a predetermined electrode size, and rolled by using a roller to produce a positive electrode plate 11 in which a positive electrode mixture layer is formed on both the surfaces of the positive electrode core.

### [Production of Negative Electrode Plate]

A predetermined negative electrode mixture slurry was applied on both surfaces of a negative electrode core composed of copper foil, dried with a drying apparatus, and compressed with a roller of a roll-pressing machine so as to have a predetermined thickness. In this time, a negative electrode active material was a mixed negative electrode of graphite and LSX. A negative electrode mixture layer included 0.01% of single-layer carbon nanotube (CNT) as a conductive agent. Further, the negative electrode mixture slurry was prepared by mixing 100 parts by mass of the negative electrode active material, 1 part by mass of carboxymethylcellulose (CMC), 1 part by mass of polyacrylic acid (PAA), and 1 part by mass of styrene-butadiene rubber (SBR), and using water as a dispersion medium. A proportion of the Si material in the negative electrode active material was 6 mass%. A density of the negative electrode mixture layer (negative electrode density) was 1.6 g/cc. The long negative electrode core on which the negative electrode mixture layer was formed was cut to a predetermined electrode size to produce a negative electrode plate 12.

### [Production of Electrode Assembly]

The produced positive electrode plate 11 and negative electrode plate 12 were spirally wound via a separator 13 to produce a wound electrode assembly 14.

### [Production of Exterior Housing Can]

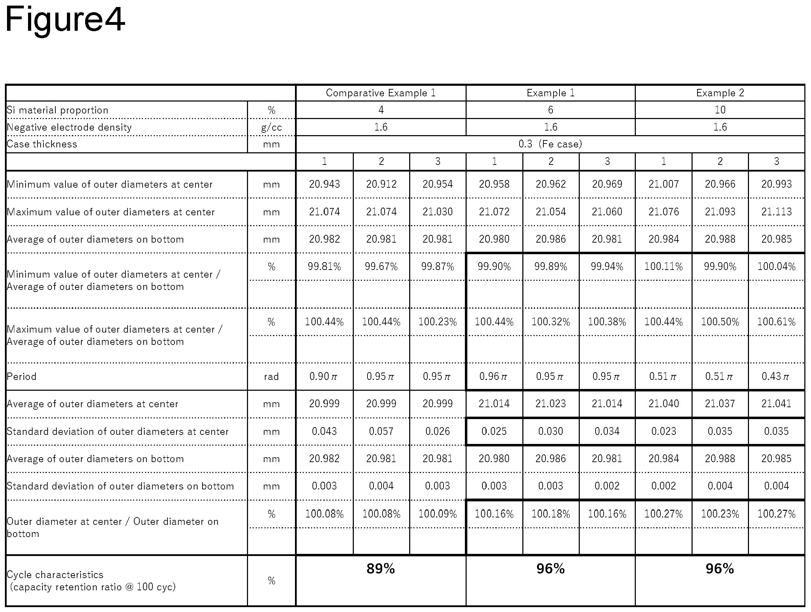

The above electrode assembly 14 was housed in a bottomed cylindrical exterior housing can 15, insulating plates 17 and 18 were respectively disposed on the upper and lower sides of the electrode assembly, and a non-aqueous electrolyte liquid was injected inside the exterior housing can 15 made of Fe. Thereafter, an end of an opening of the exterior housing can 15 was sealed with a gasket 27 and a sealing assembly 16 to produce a cylindrical lithium-ion secondary battery. A column of Example 1 in FIG. 4 shows measurement results of outer diameters at a center of a barrel part and on a bottom end of the barrel part. The measurement was performed with an initial cell in a fully charged state. The term "initial cell" corresponds to a secondary battery 10 fully charged immediately after shipping, in a commercial product. In the experiment, an initial capacity of the secondary battery 10 was confirmed, and then the secondary battery 10 subjected to two cycles of charge and discharge was assumed as the initial cell, and the outer diameter of the secondary battery 10 in the fully charged state was measured. In FIG. 4, "Outer diameter at center" represents "an outer diameter at a center of the barrel part". "Outer diameter on bottom" represents "an outer diameter on the bottom end of the barrel part". In FIG. 4, "period" represents a period about a circumferential angle of the outer diameter at the center of the barrel part. In FIG. 4, "Outer diameter at center / outer diameter on bottom" represents a proportion (%) of an average value of the outer diameters at the center of the barrel part relative to an average value of the outer diameters on the bottom end of the barrel part.

As shown in FIG. 4, as Example 1, three experimental products were used to measure each outer diameter. For example, proportions (Dimin×100/D1a) of a minimum value Dimin of the outer diameters at the center of the barrel part relative to an average value D1a of the outer diameters on the bottom end of the barrel part were greater than or equal to 99.89% and less than or equal to 99.94%, which were greater than or equal to 99.89%. Proportions (Dimax×100/D1a) of a maximum value Dimax of the outer diameters at the center of the barrel part relative to the average value D1a of the outer diameters on the bottom end of the barrel part were greater than or equal to 100.32% and less than or equal to 100.44%, which were less than or equal to 100.80%. Periods of the outer diameters at the center of the barrel part were 0.95π or 0.96π. Proportions (Diav×100/D1a) of an average value Diav of the outer diameters at the center of the barrel part relative to the average value D1a of the outer diameters on the bottom end of the barrel part were greater than or equal to 100.16% and less than or equal to 100.18%. Standard deviations σi of the outer diameters at the center of the barrel part were greater than or equal to 0.025 mm and less than or equal to 0.034 mm. A thickness of the exterior housing can 15 was determined as 0.3 mm.

### [Example 2]

In Example 2, as shown in FIG. 4, the proportion of the Si material in the negative electrode active material was 10 mass%. A column of Example 2 in FIG. 4 shows measurement results of outer diameters of a barrel part 15a of the exterior housing can 15. As shown in FIG. 4, as Example 2, three experimental products were used to measure each outer diameter. For example, proportions (Dimin×100/D1a) of a minimum value Dimin of the outer diameters at the center of the barrel part relative to an average value D1a of the outer diameters on the bottom end of the barrel part were greater than or equal to 99.90% and less than or equal to 100.11%, which were greater than or equal to 99.89%. Proportions (Dimax×100/D1a) of a maximum value Dimax of the outer diameters at the center of the barrel part relative to the average value D1a of the outer diameters on the bottom end of the barrel part were greater than or equal to 100.44% and less than or equal to 100.61%, which were less than or equal to 100.80%. Periods of the outer diameters at the center of the barrel part were 0.43π or 0.51π. Proportions (Diav×100/D1a) of an average value Diav of the outer diameters at the center of the barrel part relative to the average value D1a of the outer diameters on the bottom end of the barrel part were greater than or equal to 100.23% and less than or equal to 100.27%. Standard deviations σi of the outer diameters at the center of the barrel part were greater than or equal to 0.023 mm and less than or equal to 0.035 mm. The other configurations in Example 2 were same as in Example 1.

### [Example 3]

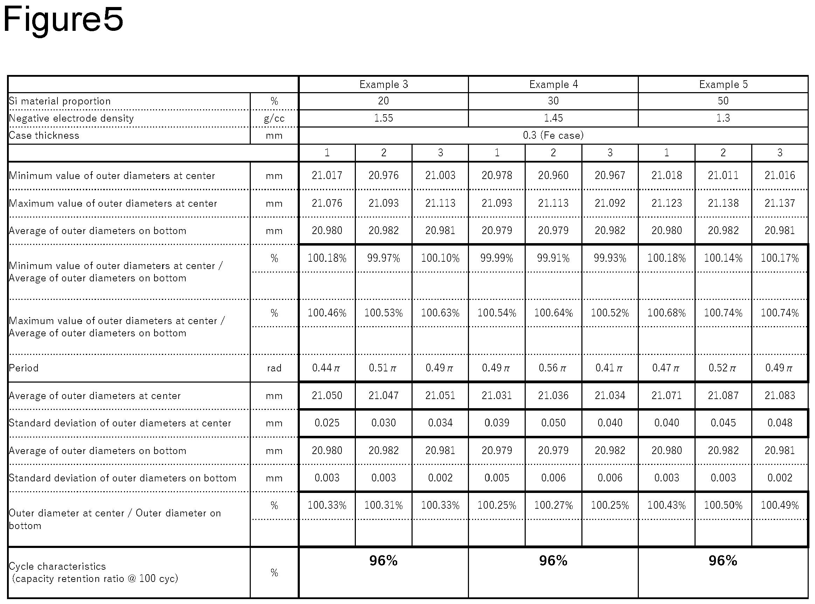

In Example 3, as shown in FIG. 5, the proportion of the Si material in the negative electrode active material was 20 mass%. A density of the negative electrode mixture layer (negative electrode density) was 1.55 g/cc. A column of Example 3 in FIG. 5 shows measurement results of outer diameters of a barrel part 15a of the exterior housing can 15. As shown in FIG. 5, as Example 3, three experimental products were used to measure each outer diameter. For example, proportions (Dimin×100/D1a) of a minimum value Dimin of the outer diameters at the center of the barrel part relative to an average value D1a of the outer diameters on the bottom end of the barrel part were greater than or equal to 99.97% and less than or equal to 100.18%, which were greater than or equal to 99.89%. Proportions (Dimax×100/D1a) of a maximum value Dimax of the outer diameters at the center of the barrel part relative to the average value D1a of the outer diameters on the bottom end of the barrel part were greater than or equal to 100.46% and less than or equal to 100.63%, which were less than or equal to 100.80%. Periods of the outer diameters at the center of the barrel part were greater than or equal to 0.44π and less than or equal to 0.51π. Proportions (Diav×100/D1a) of an average value Diav of the outer diameters at the center of the barrel part relative to the average value D1a of the outer diameters on the bottom end of the barrel part were greater than or equal to 100.3 1% and less than or equal to 100.33%. Standard deviations σi of the outer diameters at the center of the barrel part were greater than or equal to 0.025 mm and less than or equal to 0.034 mm. The other configurations in Example 3 were same as in Example 1.

### [Example 4]

In Example 4, as shown in FIG. 5, the proportion of the Si material in the negative electrode active material was 30 mass%. A density of the negative electrode mixture layer (negative electrode density) was 1.45 g/cc. A column of Example 4 in FIG. 5 shows measurement results of outer diameters of a barrel part 15a of the exterior housing can 15. As shown in FIG. 5, as Example 4, three experimental products were used to measure each outer diameter. For example, proportions (Dimin×100/D1a) of a minimum value Dimin of the outer diameters at the center of the barrel part relative to an average value D1a of the outer diameters on the bottom end of the barrel part were greater than or equal to 99.91% and less than or equal to 99.99%, which were greater than or equal to 99.89%. Proportions (Dimax×100/D1a) of a maximum value Dimax of the outer diameters at the center of the barrel part relative to the average value D1a of the outer diameters on the bottom end of the barrel part were greater than or equal to 100.52% and less than or equal to 100.64%, which were less than or equal to 100.80%. Periods of the outer diameters at the center of the barrel part were greater than or equal to 0.41π and less than or equal to 0.56π. Proportions (Diav×100/D1a) of an average value Diav of the outer diameters at the center of the barrel part relative to the average value D1a of the outer diameters on the bottom end of the barrel part were greater than or equal to 100.25% and less than or equal to 100.27%. Standard deviations σi of the outer diameters at the center of the barrel part were greater than or equal to 0.039 mm and less than or equal to 0.050 mm. The other configurations in Example 4 were same as in Example 1.

### [Example 5]

In Example 5, as shown in FIG. 5, the proportion of the Si material in the negative electrode active material was 50 mass%. A density of the negative electrode mixture layer (negative electrode density) was 1.30 g/cc. A column of Example 3 in FIG. 5 shows measurement results of outer diameters of a barrel part 15a of the exterior housing can 15. As shown in FIG. 5, as Example 5, three experimental products were used to measure each outer diameter. For example, proportions (Dimin×100/D1a) of a minimum value Dimin of the outer diameters at the center of the barrel part relative to an average value D1a of the outer diameters on the bottom end of the barrel part were greater than or equal to 100.14% and less than or equal to 100.18%, which were greater than or equal to 99.89%. Proportions (Dimax×100/D1a) of a maximum value Dimax of the outer diameters at the center of the barrel part relative to the average value D1a of the outer diameters on the bottom end of the barrel part were greater than or equal to 100.68% and less than or equal to 100.74%, which were less than or equal to 100.80%. Periods of the outer diameters at the center of the barrel part were greater than or equal to 0.47π and less than or equal to 0.52π. Proportions (Diav×100/D1a) of an average value Diav of the outer diameters at the center of the barrel part relative to the average value D1a of the outer diameters on the bottom end of the barrel part were greater than or equal to 100.43% and less than or equal to 100.50%. Standard deviations σi of the outer diameters at the center of the barrel part were greater than or equal to 0.040 mm and less than or equal to 0.048 mm. The other configurations in Example 5 were same as in Example 1.

### [Comparative Example 1]

In Comparative Example 1, as shown in FIG. 4, the proportion of the Si material in the negative electrode active material was 4 mass%. Outer diameters of a barrel part 15a of the exterior housing can 15 are shown in a column of Comparative Example 1 in FIG. 4. The column of Comparative Example 1 in FIG. 4 shows measurement results of the outer diameters of the barrel part 15a of the exterior housing can 15. As shown in FIG. 4, as Comparative Example 1, three experimental products were used to measure each outer diameter. Differing from Examples 1 to 5, in the exterior housing can 15 of Comparative Example 1, proportions of a minimum value Dimin of the outer diameters at the center of the barrel part relative to an average value D1a of the outer diameters on the bottom end of the barrel part were less than 99.89%, which were out of range of the embodiment. Periods of change in the outer diameters at the center of the barrel part relative to the circumferential angle were greater than or equal to 0.9π. In Comparative Example 1, differing from Examples 1 to 5, proportions of an average value Diav of the outer diameters at the center of the barrel part relative to the average value D1a of the outer diameters on the bottom end of the barrel part were less than 100.10%, which were out of range of the embodiment. Standard deviations σi of the outer diameters at the center of the barrel part were greater than or equal to 0.026 mm and less than or equal to 0.057 mm. The other configurations in Comparative Example 1 were same as in Example 1.

### [Comparative Example 2]

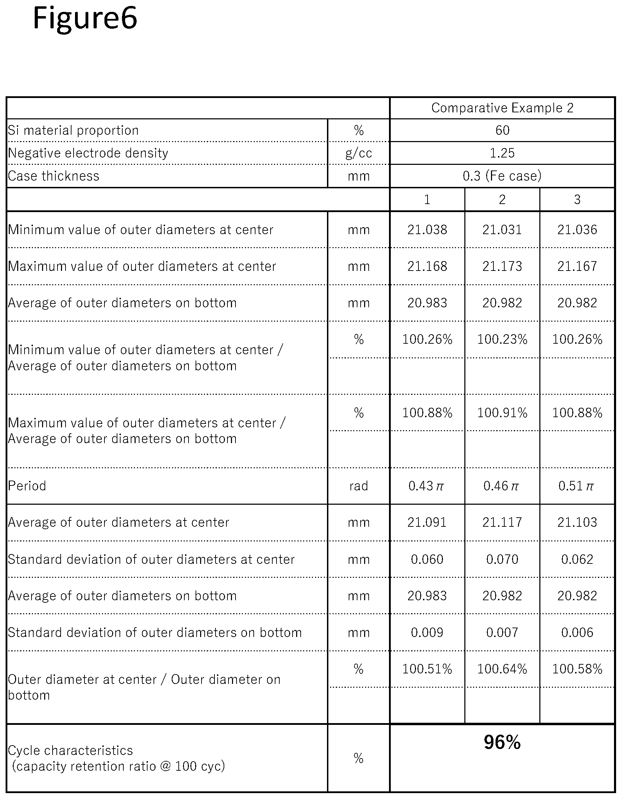

In Comparative Example 2, as shown in FIG. 6, the proportion of the Si material in the negative electrode active material was 60 mass%. A density of the negative electrode mixture layer (negative electrode density) was 1.25 g/cc. A column of Comparative Example 2 in FIG. 6 shows measurement results of the outer diameters of the barrel part 15a of the exterior housing can 15. As shown in FIG. 6, as Comparative Example 2, three experimental products were used to measure each outer diameter. Differing from Examples 1 to 5, in the exterior housing can 15 of Comparative Example 2, proportions of a maximum value Dimax of the outer diameters at the center of the barrel part relative to an average value D1a of the outer diameters on the bottom end of the barrel part were greater than 100.80%, which were out of range of the embodiment. In Comparative Example 2, differing from Examples 1 to 5, proportions of an average value Diav of the outer diameters at the center of the barrel part relative to the average value D1a of the outer diameters on the bottom end of the barrel part were greater than 100.50%, which were out of range of the embodiment. Standard deviations σi of the outer diameters at the center of the barrel part were greater than 0.050 mm, which were out of range of the embodiment. The other configurations in Comparative Example 2 were same as in Example 1.

### [Evaluation of Cycle Characteristics]

By using the secondary batteries of Examples 1 to 5 and Comparative Examples 1 to 2 produced as above, a capacity retention ratio at 100th cycle was measured. The measurement results of the capacity retention ratio are shown in columns "Cycle characteristics" in FIGS. 4 to 6. As understood from this test result, it was confirmed that the capacity retention ratio was as low as 89% in a case of Comparative Example 1, but the capacity retention ratio was as high as 96% in Examples 1 to 5.

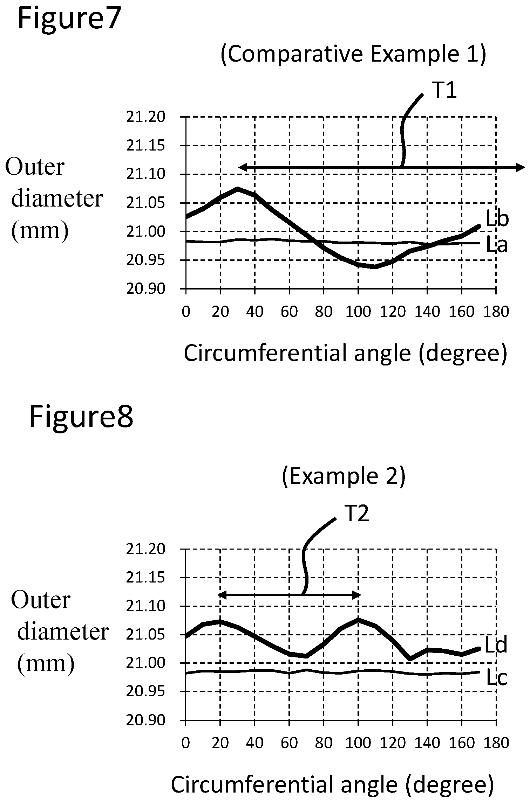

FIG. 7 is a view indicating a relationship between the outer diameter on the bottom end of the barrel part and the circumferential angle of the outer diameter at the center of the barrel part in the secondary battery of Comparative Example 1. FIG. 8 is a view corresponding to FIG. 7 in the secondary battery of Example 2. A thin solid line La in FIG. 7 indicates the change in the outer diameter on the bottom end of the barrel part relative to the circumferential angle in Comparative Example 1. A thick solid line Lb in FIG. 7 indicates the change in the outer diameter at the center of the barrel part relative to the circumferential angle in Comparative Example 1. A thin solid line Lc in FIG. 8 indicates the change in the outer diameter on the bottom end of the barrel part relative to the circumferential angle in Example 2. A thick solid line Ld in FIG. 8 indicates the change in the outer diameter at the center of the barrel part relative to the circumferential angle in Example 2. The arrows T1 and T2 indicate the periods of the circumferential angle of the outer diameters at the center of the barrel part in each of Comparative Example 1 and Example 2.

As understood from comparison between FIGS. 7 and 8, the minimum value of the outer diameters at the center of the barrel part is lower than the outer diameters on the bottom end of the barrel part in Comparative Example 1, but the minimum value of the outer diameters at the center of the barrel part is higher than the outer diameters on the bottom end of the barrel part in Example 2. It is understood from this result that the binding pressure of the exterior housing can against the electrode assembly in Example 2 is higher than that in Comparative Example 1. In addition, the period T 1 of the outer diameters at the center of the barrel part is 0.90π in Comparative Example 1, but the period T2 of the outer diameters at the center of the barrel part is 0.51π in Example 2. It is understood also from this result that the binding pressure of the exterior housing can against the electrode assembly in Example 2 is higher than that in Comparative Example 1.

Although views corresponding to FIG. 7 and FIG. 8 are omitted, the outer diameters at the center of the barrel part change relative to the circumferential angle in the secondary battery of Comparative Example 2 with the period similar to that of Example 2 in FIG. 8. Meanwhile, the difference between the minimum value and the maximum value of the outer diameters at the center of the barrel part becomes rather large compared with a case in FIG. 8. Accordingly, the outer circumferential shape of the barrel part largely changes relative to the cylindrical surface in Comparative Example 2.

Without limitation to the above Examples 1 to 5, the same effect as in the above Examples 1 to 5 may be obtained when the proportion of graphite in the negative electrode active material is greater than or equal to 50 mass% and less than or equal to 94 mass%, the proportion of the Si material in the negative electrode active material is greater than or equal to 6 mass% and less than or equal to 50 mass%, the density of the negative electrode mixture layer is greater than or equal to 1.3 g/cc and less than or equal to 1.75 g/cc, the material of the exterior housing can is Fe, and the thickness of the exterior housing can is greater than or equal to 0.18 mm and less than or equal to 0.33 mm.

### REFERENCE SIGNS LIST

10, 10a cylindrical secondary battery (secondary battery), 11 positive electrode plate, 12 negative electrode plate, 13 separator, 14, 14a electrode assembly, 15 exterior housing can, 15a barrel part, 15b bottom plate, 15c R part, 16 sealing assembly, 17, 18 insulating plate, 19 positive electrode tab, 20 negative electrode tab, 21 protruded part, 22 filter, 23 lower valve member, 24 insulating member, 25 upper valve member, 26 cap, 27 gasket, 28 space.

## Claims

1. A cylindrical secondary battery, comprising:
an exterior housing can having a cylindrical barrel part and one end sealed with a bottom plate; and
an electrode assembly disposed inside the barrel part, wherein
a positive electrode plate and a negative electrode plate are wound via a separator in the electrode assembly,
a proportion of a minimum value of outer diameters at a center of the barrel part being a center in an axial direction of the exterior housing can relative to an average value of outer diameters on a bottom end of the barrel part is greater than or equal to 99.89%, and a proportion of a maximum value of the outer diameters at the center of the barrel part relative to an average value of the outer diameters on the bottom end of the barrel part is less than or equal to 100.80% in the exterior housing can, and
the outer diameter at the center of the barrel part periodically changes relative to a circumferential angle, and a period of change in the outer diameter at the center of the barrel part relative to the circumferential angle is greater than or equal to 0.4π and less than or equal to 1.0π.

2. The cylindrical secondary battery according to claim 1, wherein
the period of change in the outer diameter at the center of the barrel part relative to the circumferential angle is greater than or equal to 0.4π and less than or equal to 0.6π.

3. The cylindrical secondary battery according to claim 1 or 2, wherein
the negative electrode plate has a band-shaped core and a mixture layer formed on the core,
the mixture layer is composed of including an active material containing graphite and a Si material, and
a proportion of the graphite in the active material is greater than or equal to 50 mass% and less than or equal to 94 mass%, a proportion of the Si material in the active material is greater than or equal to 6 mass% and less than or equal to 50 mass%, a density of the mixture layer is greater than or equal to 1.3 g/cc and less than or equal to 1.75 g/cc, a material of the exterior housing can is Fe, and a thickness of the exterior housing can is greater than or equal to 0.18 mm and less than or equal to 0.33 mm.
